# EUROPEAN PATENT APPLICATION

(11) **EP 2 628 949 A1**
(43) Date of publication of application: **21.08.2013**
(21) Application number: 11832498.7
(22) Date of filing: 07.10.2011
(51) Int. Cl.: F04B 39/00, F04B 39/12, F04C 29/00

(54) **ELECTRIC COMPRESSOR**

(30) Priority: 14.10.2010 JP 2010231396
(71) Applicant: Calsonic Kansei Corporation, Saitama-shi Saitama 331-8501 (JP)
(72) Inventor: SHIMAGUCHI, Hirotada, Saitama-shi Saitama 331-8501 (JP); MIYAJI, Toshikatsu, Saitama-shi Saitama 331-8501 (JP); OSAKI, Tatsuya, Saitama-shi Saitama 331-8501 (JP)
(74) Representative: Grünecker, Kinkeldey, Stockmair & Schwanhäusser
(86) International application number: PCT/JP2011/073231
(87) International publication number: WO 2012/050063

(57) **Abstract**

Provided is an electric compressor (1), which drives, in a cylindrical housing (2), a compressor (4) using an electric motor (3) disposed in the housing (2). The electric compressor is characterized in that the electric motor (3) is formed with a stator (7), which is fixed to the housing (2), and which generates a magnetic force when a current is carried, and a rotor (9), which is rotatably disposed inside of the stator (7), and which rotates with the magnetic force generated by the stator (7). The electric compressor is also characterized in that the stator (7) is press-fitted in a cylindrical body (6) composed of a material having a linear expansion coefficient close to that of the stator (7), and that the cylindrical body (6) is partially press-fitted at a plurality of areas in the inner wall (10) of the housing (2).

## Description

### TECHNICAL FIELD

The present invention relates to an electric compressor.

### BACKGROUND ART

This type of electric compressor incorporates, in a cylindrical housing, a compressing mechanism, an electric motor which drives the compressing mechanism, and a drive circuit which controls driving of the electric motor.

The above-mentioned electric motor incorporated in the housing is formed with a stator, and a rotator which rotates inside the stator. The stator is formed by stacking a plurality of laminated steel plates and by winding wire around the steel plates. As disclosed in Patent Literature 1, such a stator is fixed to the inner periphery of the housing by shrink-fitting.

In contrast, in a hermetic scroll compressor as disclosed in Patent Literature 2, when the motor is fixed inside a housing (case), the stator of the motor is fixed to the inner periphery of a motor frame by press-fitting or shrink-fitting, and the motor is inserted, together with the motor frame, into the cylindrical case to be fixed to a frame member with bolts.

### CITATION LIST

### PATENT LITERATURE

Patent Literature 1: Japanese Unexamined Patent Application Laid-Open No. 2009-228546
Patent Literature 2: Japanese Unexamined Patent Application Laid-Open No. 200-97417

### SUMMARY OF INVENTION

### TECHNICAL PROBLEM

However, in the electric compressor as in Patent Literature 1, the housing is made of aluminum, and the stator is made of iron, and thus when the stator is fixed to the inner periphery of the housing by shrink-fitting, an interference is provided between the stator and the housing, and becomes very large at normal temperature. The large interference causes the housing to extend uniformly if the housing is formed with a uniform thickness, but since mounting legs or the like are provided, the thickness of the housing is not uniform, thereby providing a thick portion and a thin portion. Force, if applied to the thin portion, makes deformation larger. The increase in deformation of the housing creates a problem of causing shaft misalignment.

In contrast, in the compressor as in Patent Literature 2, the stator is inserted in the case in a state of being shrink-fitted in the motor frame, and is fixed to the frame member with bolts, thereby raising a problem of increasing the number of works and the number of parts.

In addition, since vibration of the stator is large, there arises a problem in which vibration, in the case, of the stator which is fixed to the case with bolts, generates noise.

Accordingly, it is an object of the present invention to provide an electric compressor which reduces the number of works and the number of parts and which is capable of suppressing deformation of a housing while suppressing vibration of a stator within the housing.

To achieve the above-mentioned object, a first aspect of the present invention is an electric compressor (1) including: a cylindrical housing (2); an electric motor (3) disposed in the housing (2): and a compressor (4) driven by the electric motor (3), wherein the electric motor (3) is formed with a stator (7) which is fixed to the housing (2) and generates magnetic force when energized, and a rotator (9) which is rotatably disposed inside the stator (7) and is rotated by the magnetic force generated by the stator (7), the stator (7) is press-fitted in a cylindrical body (6) of a material having a linear expansion coefficient close to that of the stator (7), and the cylindrical body (6) is partially press-fitted in an inner wall (10) of the housing (2) at a plurality of locations.

According to a second aspect of the present invention, in the electric compressor (1) according to the first aspect, the cylindrical body (6) is press-fitted in the inner wall (10) of the housing (2) at at least two or more locations in an axial direction.

According to a third aspect of the present invention, in the electric compressor (1) according to the first aspect or the second aspect, the inner wall (10) of the housing (2) is provided with a rear-end side press-fitting wall (11) projecting in an inside-diameter direction from the inner wall (10), and a distal-end side press-fitting wall (18), and the cylindrical body (6) is provided with a distal-end press-fitting portion (21) at a position facing the distal-end side press-fitting wall (18) of the housing (2), and a rear-end press-fitting portion (22) at a position facing the rear-end side press-fitting wall (11) of the housing (2).

According to a fourth aspect of the present invention, in the electric compressor (1) according to any one of the first to third aspects, the cylindrical body (6) is press-fitted in the inner wall (10) of the housing (2) at at least three or more locations in a circumferential direction.

According to the first to fourth aspects of the present invention described above, since the stator is press-fitted in the cylindrical body made of a material having a linear expansion coefficient close to that of the stator the whole of a plurality of laminated steel plates forming the stator is fixed, thereby making it possible to suppress the vibration of the stator. Therefore, noise can be prevented.

In addition, since the cylindrical body is partially press-fitted in the inner wall of the housing at a plurality of locations, deformation of the housing can be prevented even when a large interference is provided.

Furthermore, since a step is provided at the inner periphery of the housing, the press-fitting load can be reduced, thereby facilitating insertion of the cylindrical body into the housing.

### BRIEF DESCRIPTION OF DRAWINGS

[FIG. 1]

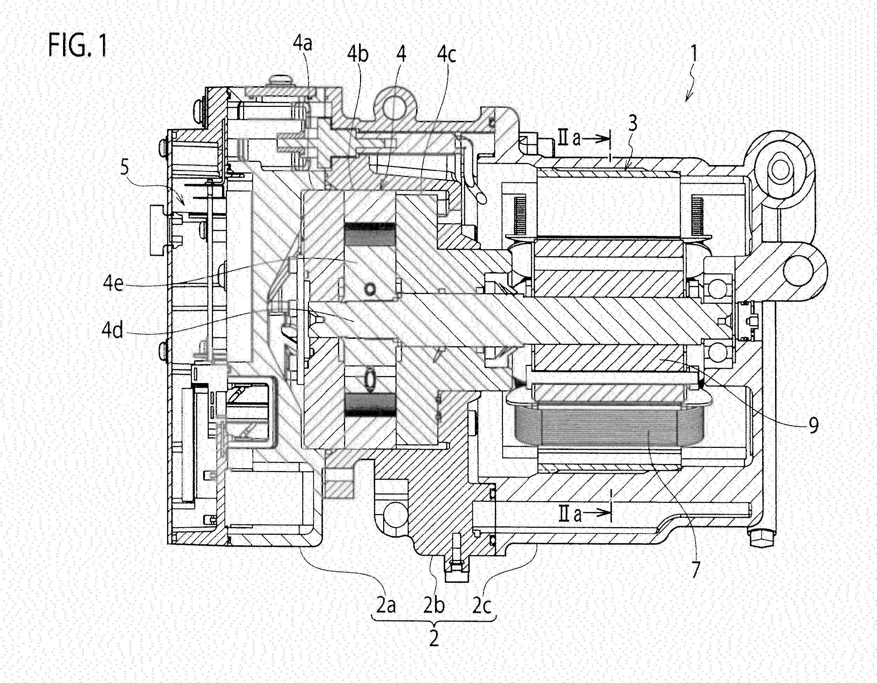

   FIG. 1 is a cross-sectional view of an electric compressor.
[FIG. 2]

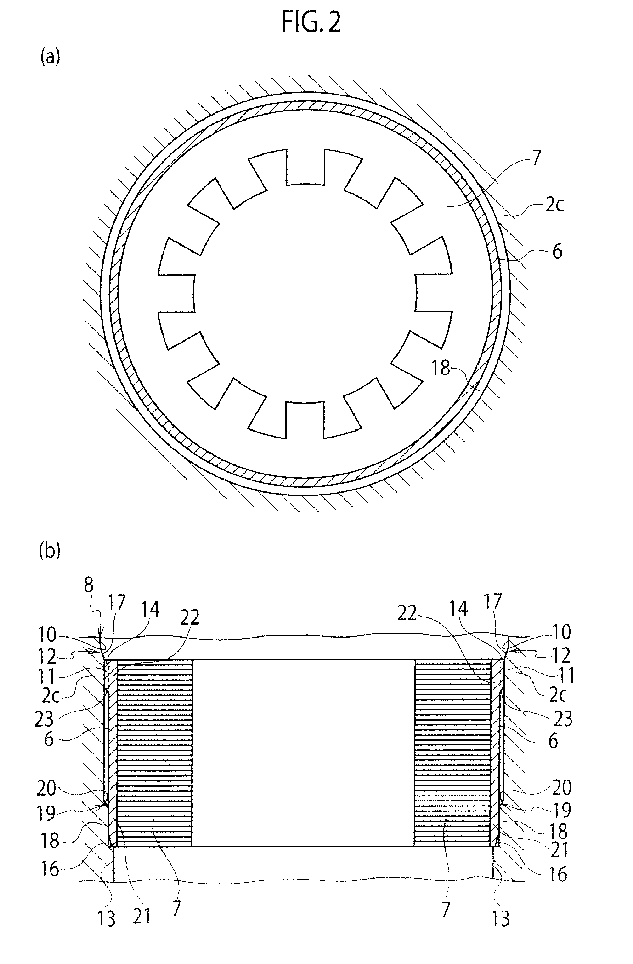

   FIG. 2(a) is an enlarged schematic cross-sectional view along line IIa-IIa in FIG. 1, and FIG. 2(b) is a cross-sectional view of FIG. 2(a).
[FIG. 3]

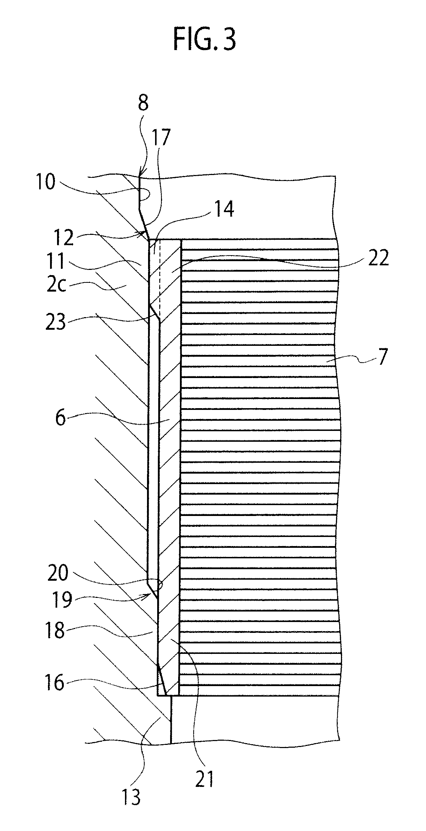

   FIG. 3 is an enlarged schematic cross-sectional view of an essential portion in FIG. 2(b).
[FIG. 4]

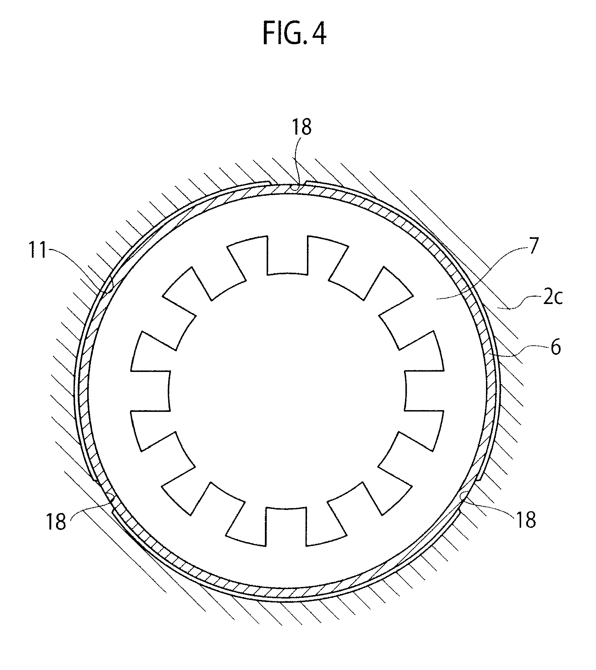

   FIG. 4 is an enlarged schematic cross-sectional view of an essential portion according to a second embodiment.
[FIG. 5]

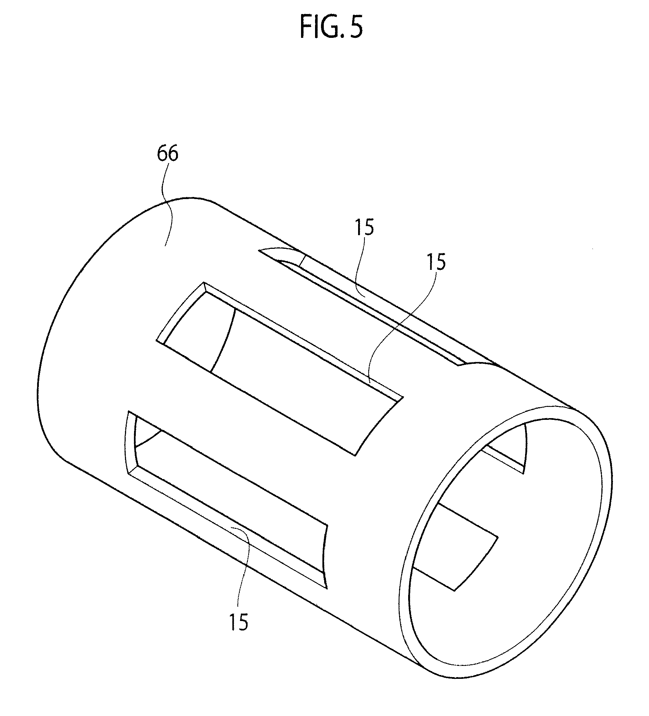

   FIG. 5 is a perspective view of another example of an iron ring.

### DESCRIPTION OF EMBODIMENTS

Hereinafter, a first embodiment of an electric compressor according to the present invention will be described referring to FIGS. 1 to 3.

As shown in FIG. 1, the electric compressor 1 includes a cylindrical housing 2, a compressor 4 which compresses a coolant with drive force of an electric motor 3 housed in the housing 2, and a drive circuit 5 which controls drive of the electric motor 3.

The electric motor 3 according to the present embodiment is formed with a stator 7 which is fixed to the housing 2 and generates magnetic force when energized, and a rotator 9 which is rotatably disposed inside the stator 7 and is rotated by the magnetic force generated by the stator 7. The stator 7 is press-fitted in an iron ring (cylindrical body) 6 of a material having a linear expansion coefficient close to that of the stator 7, and the iron ring 6 is partially press-fitted in the inner wall of the housing 2 at a plurality of locations.

In addition, the iron ring 6 is press-fitted in the inner wall of the housing 2 at at least two or more locations in the axial direction of the electric compressor 1.

The above-mentioned cylindrical housing 2 is formed with a front housing 2a, a middle housing 2b whose one end side is coupled and fixed to the front housing 2a, and a rear housing 2c which is coupled to the other end side of the middle housing 2b and in which the electric motor 3 is housed. The electric motor 3 is inserted, together with the iron ring 6, into the rear housing 2c from an opening 8 on one side of the middle housing 2b, and is press-fitted in and fixed to an inner wall 10 on the other side.

A rear-end side press-fitting wall 11 projecting in the inside-diameter direction from the inner wall 10 is formed, on the inner wall 10 on the other side of the rear housing 2c, over the entire circumference of the inner wall 10 along the inserting direction of the electric motor 3. After that a rear-end side step 12 is formed at the continuous portion between the rear-end side press-fitting wall 11 and the inner wall 10 of the rear housing 2c, and at the step 12, there is formed a tapered surface 17 tapered from the rear-end side press-fitting wall 11 toward the inner wall 10 of the rear housing 2c.

Furthermore, on the inner wall 10 of the rear housing 2c, there is formed a distal-end side press-fitting wall 18 projecting in the inside-diameter direction from the rear-end side press-fitting wall 11, over the entire circumferential area of the rear housing 2c, along the inserting direction of the electric motor 3 on the distal end side of the rear-end side press-fitting wall 11 in the inserting direction of the electric motor 3. A distal-end side step 19 is formed at the continuous portion between the distal-end side press-fitting wall 18 and the rear-end side press-fitting wall 11, and at the step 19, there is formed a tapered surface 20 tapered from the distal-end side press-fitting wall 18 toward the rear-end side press-fitting wall 11.

Moreover, on the distal end side of the distal-end side press-fitting wall 18 in the inserting direction of the electric motor 3, a support wall 13 projecting on the inside-diameter side farther than the distal-end side press-fitting wall 18 is formed over the entire inner wall of the rear housing 2c. The distal end of the electric motor 3 press-fitted in the rear housing 2c abuts on the support wall 13 to position the electric motor 3 within the rear housing 2c.

In addition, the electric motor 3 is press-fitted in the rear-end side press-fitting wall 11 and the distal-end side press-fitting wall 18, and by abutment of the distal end of the electric motor 3 on the support wall 13, the electric motor 3 is fixed at a predetermined position inside the rear housing 2c.

As mentioned above, the electric motor 3 is formed with the stator 7 and the rotator 9, and the stator 7 is press-fitted in the iron ring 6. The stator 7 is generally produced with thin silicon steel plates, and is formed with a laminated steel plate which is the lamination of a plurality of steel plates. A conductive wire is wound around this laminated steel plate for the formation of a coil, resulting in generating magnetic force when energized.

Furthermore, according to the stator 7 of the present embodiment, the iron ring 6 as a cylindrical body made of a material whose linear expansion coefficient is close to that of the stator 7 is press-fitted at the outer periphery of the stator 7. Press-fitting the iron ring 6 at the outer periphery of the stator 7 causes the whole of the plurality of laminated steel plates to be integrated firmly, thereby preventing noise originating from vibration of the individual steel plates. The iron ring 6 is press-fitted in the rear housing 2c in a state where the stator 7 is press-fitted inside.

At one distal end of the iron ring 6 (on distal end side in the inserting direction of the stator 7 into the rear housing 2c), a distal-end press-fitting portion 21 is provided at a position facing the distal-end side press-fitting wall 18 of the rear housing 2c, and a rear-end press-fitting portion 22 is provided at a position facing the rear-end side press-fitting wall 11 of the rear housing 2c. The distal-end press-fitting portion 21 is formed at the outer peripheral portion of the iron ring 6, and is press-fitted in the distal-end side press-fitting wall 18 of the rear housing 2c. In addition, a tapered surface 16 is formed at the most distal end of the distal-end press-fitting portion 21. On the rear-end press-fitting portion 22, a convex portion 14 projecting in the outside-diameter direction of the iron ring 6 is provided over the entire circumferential area of the iron ring 6. On this convex portion 14, a tapered surface 23 tapered toward the inside-diameter direction of the iron ring 6 is provided at one end, and the convex portion 14 is press-fitted in the rear-end side press-fitting wall 11 of the rear housing 2c.

In addition, the positions of the distal-end side press-fitting wall 18 and the rear-end side press-fitting wall 11 provided on the rear housing 2c are shifted in the axial direction of the rear housing 2c, and the positions of the distal-end press-fitting portion 21 and the rear-end press-fitting portion 22 of the iron ring 6 which are press-fitted in the distal-end side press-fitting wall 18 and the rear-end side press-fitting wall 11 are also shifted in the axial direction of the iron ring 6. These shifted positions are set substantially equal on the rear housing 2c side and the iron ring 6 side.

Furthermore, at a position immediately before the convex portion 14 on the iron ring 6 is press-fitted in the rear-end side press-fitting wall 11, that is, in a state where the convex portion 14 on the iron ring 6 is positioned on the tapered surface 17, the distal-end press-fitting portion 21 of the iron ring 6 is not press-fitted in the distal-end side press-fitting wall 18 of the rear housing 2c, but is positioned on the tapered surface 20. Accordingly, press-fitting the rear-end press-fitting portion 22 of the iron ring 6 in the rear-end side press-fitting wall 11 causes the distal-end press-fitting portion 21 of the iron ring 6 to be press-fitted in the distal-end side press-fitting wall 18 simultaneously, and thus a single press-fitting step makes it possible to perform press-fitting at two locations at the same time. Moreover, the provision of the tapered surfaces 16 and 23 on the iron ring 6 makes it possible to insert, with ease, the iron ring 6 into the rear housing 2c.

Note that while, in the present embodiment, the iron ring 6 is used as a material having a linear expansion coefficient close to that of the stator 7, another material having a linear expansion coefficient close to that of the stator 7 may also be used.

As mentioned above, the compressor 4, which is rotationally driven by the electric motor 3 securely press-fitted inside and fixed to the rear housing 2c, includes a front side block 4a, a cylinder block 4b, a rear side block 4c, a rotor shaft 4d, a rotor 4e, and the like. The front side block 4a and the rear side block 4c are fixed to the cylinder block 4b with bolts, and the left end and the central portion of the rotor 4d are rotatably supported by the front side block 4a and the rear side block 4c. The rotor 4e is housed in the cylinder block 4b, and is rotatably supported by the rotor shaft 4d. The drive of this compressor 4 is controlled by the drive circuit 5 housed in the front housing 2a. In this case, the drive of the compressor 4 is controlled by controlling the number of revolutions of the electric motor 3 depending on the change in the thermal load of an air conditioning system.

Next, a second embodiment of the electric compressor according to the present invention will be described referring to FIG. 4. In the drawing, the same reference numeral is attached to the same constituent part as that of the above-mentioned embodiment for explanation, and the repeated explanation is omitted.

According to the above-mentioned embodiment, the distal-end side press-fitting wall 18 and the rear-end side press-fitting wall 11 are formed on the entire inner peripheral area of the rear housing 2c, whereas according to the present embodiment, the distal-end side press-fitting wall 18 and the rear-end side press-fitting wall 11 are provided at equal intervals at three circumferential locations. Also in the present embodiment, the distal-end press-fitting portion 21 and the rear-end press-fitting portion 22 are formed on the iron ring 6, and are provided on the entire outer peripheral area of the iron ring 6.

According to the above-mentioned respective embodiments, the stator 7 is press-fitted into and fixed to the iron ring 6 of a material having a linear expansion coefficient close to that of the stator 7, the whole of the plurality of the laminated steel plates forming the stator 7 is totally fixed, which makes it possible to suppress the vibration of the stator 7 and to thereby prevent generation of noise.

In addition, the iron ring 6 is press-fitted in the inner wall 10 of the rear housing 2c at a plurality of locations (the distal-end press-fitting portion 21 is press-fitted in the distal-end side press-fitting wall 18, and the rear-end press-fitting portion 22 is press-fitted in the rear-end side press-titting wall 11). and thus even if a large interference is provided between the inside-diameter portion of the rear housing 2c and the iron ring 6, deformation of the rear housing 2c can be prevented.

Furthermore, the two steps 12 and 19 are provided at positions shifted in the axial direction by the provision of the distal-end side press-fitting wall 18 and the rear-end side press-fitting wall 11 on the inner wall 10 of the rear housing 2c, and thus a single press-fitting step makes it possible to perform press-fitting at two locations at the same time. This facilitates mounting of the iron ring 6 into the rear housing 2c, and eventually improves the mountability of the electric motor 3 into the rear housing 2c.

Moreover, in the above-mentioned embodiments, although at least two press-fitting locations are provided in the axial direction and at least three press-fitting locations are provided in the circumferential direction according to the above-mentioned embodiments, three or more press-fitting locations may be provided in the axial direction, and four or more press-fitting locations may be provided in the circumferential direction.

In addition, in the above-mentioned embodiments, although there is shown an example in which the iron ring 6 has been formed into a cylindrical shape, a shape other than the cylindrical shape is feasible as long as it can firmly fix the laminated steel plates of the stator 7 together, and for example, the iron ring 6 may have a shape having a window 15 provided in the outer circumferential wall of the iron ring 6 shown in FIG. 5.

Note that, the entire contents of Japanese Patent Application No. 2010-231396 (filed on October 14, 2010) are incorporated herein by reference.

The present invention is not limited to the description of the foregoing embodiments of the invention, and can be carried out in various other modes by appropriate modifications.

### INDUSTRIAL APPLICABILITY

The present invention can be applied to an electric compressor or the like to be mounted in a vehicle.

## Claims

1. An electric compressor (1) comprising:
a cylindrical housing (2);
an electric motor (3) disposed in the housing (2); and
a compressor (4) driven by the electric motor (3), wherein
the electric motor (3) is formed with a stator (7) which is fixed to the housing (2) and generates magnetic force when energized, and a rotator (9) which is rotatably disposed inside the stator (7) and is rotated by the magnetic force generated by the stator (7),
the stator (7) is press-fitted in a cylindrical body (6) of a material having a linear expansion coefficient close to that of the stator (7), and
the cylindrical body (6) is partially press-fitted in an inner wall (10) of the housing (2) at a plurality of locations.

2. The electric compressor (1) according to claim 1, wherein
the cylindrical body (6) is press-fitted in the inner wall (10) of the housing (2) at at least two or more locations in an axial direction.

3. The electric compressor (1) according to claim 2, wherein
the inner wall (10) of the housing (2) is provided with a rear-end side press-fitting wall (11) projecting in an inside-diameter direction from the inner wall (10), and a distal-end side press-fitting wall (18), and
the cylindrical body (6) is provided with a distal-end press-fitting portion (21) at a position facing the distal-end side press-fitting wall (18) of the housing (2), and a rear-end press-fitting portion (22) at a position facing the rear-end side press-fitting wall (11) of the housing (2).

4. The electric compressor (1) according to claim 3, wherein
the cylindrical body (6) is press-fitted in the inner wall (10) of the housing (2) at at least three or more locations in a circumferential direction.
